# FASCICULE DE BREVET EUROPEEN

(11) **EP 0 603 049 B1**
(45) Date de publication et mention de la délivrance du brevet: **23.09.1998**
(21) Numéro de dépôt: 93403005.7
(22) Date de dépôt: 13.12.1993
(51) Int. Cl.: H04Q 7/20

(54) **Dispositif de recherche de connexion d'un terminal à un réseau d'un système de radiocommunication comprenant plusieurs réseaux**
Anordnung zum Verbindungsaufbau von einem Endgerät zum Netz eines Funkkommunikationssystems mit mehreren Netzen
Arrangement for connection set-up from terminal to the network of a radio communicationsystem with a plurality of networks

(30) Priorité: 16.12.1992 FR 9215203
(43) Date de publication de la demande: 22.06.1994
(73) Titulaire: ALCATEL ALSTHOM COMPAGNIE GENERALE D'ELECTRICITE, 75008 Paris (FR)
(72) Inventeur: Pinault, Francis, F-92270 Bois Colombes (FR); Jouin, Christophe, F-92270 Bois Colombes (FR)
(74) Mandataire: Pothet, Jean Rémy Emile Ludovic

(56) Documents cités:
- EP-A- 0 382 309
- US-A- 4 916 728
- US-A- 5 159 625

## Description

La présente invention concerne un dispositif de recherche de connexion dans un terminal d'un système de radiocommunication prévu pour rechercher la connexion du terminal sur un des réseaux de ce système.

On se réfère ici aux systèmes de radiocommunications s'étendant sur plusieurs entités géographiques, des pays par exemple, ce qui est le cas du système paneuropéen cellulaire numérique de radiocommunication connu sous le nom de système GSM. Un tel système se décompose en plusieurs réseaux radio généralement gérés par des opérateurs distincts, chaque réseau couvrant un territoire correspondant à la totalité ou bien à une ou plusieurs régions d'un pays. Ces réseaux radio sont par ailleurs reliés aux réseaux câblés des pays correspondants de sorte qu'un terminal du système de radiocommunication, puisse communiquer avec un terminal d'un réseau câblé.

De plus, plusieurs réseaux radio peuvent coexister dans un même pays, les zones de couverture de ces réseaux pouvant se superposer partiellement ou en totalité. Ainsi, lorsqu'un terminal veut accéder au système de radiocommunication, la question se pose de savoir à quel réseau radio il va se connecter car il y a un choix possible. A cet effet le terminal dispose d'un dispositif de recherche de connexion pour établir la liste des réseaux radio sur lesquels il pourrait se connecter.

On connaît en outre du document US 5 159 625 un dispositif de recherche de connexion d'un terminal à un réseau d'un système de radiocommunication comprenant plusieurs réseaux, le système s'étendant dans plusieurs entités géographiques chacune pourvue d'un réseau au moins, le terminal étant affilié à un réseau de rattachement appartenant à une entité géographique d'origine.

Lorsque le terminal s'éloigne de son réseau de rattachement, il doit sélectionner le réseau sur lequel il va se connecter, entre ce réseau de rattachement et un autre réseau, cet autre réseau appartenant soit à la même entité géographique d'origine, soit à une autre entité géographique. Selon ce document, certains terminaux peuvent choisir de donner la préférence à une connexion au réseau de rattachement, à moins que celui-ci ne soit pas disponible. D'autres terminaux peuvent au contraire choisir de donner la préférence à une connexion à l'autre réseau, à moins que celui-ci ne soit pas disponible. En outre, certains terminaux peuvent imposer la connexion exclusive au réseau de rattachement ou à l'autre réseau.

Par ailleurs un terminal particulier qui peut fonctionner dans tout le système de radiocommunication est affilié à un réseau radio particulier, le réseau de rattachement, tout comme un terminal téléphonique est affilié à un réseau câblé particulier. La raison en est qu'un terminal est le moyen d'obtenir des services tels que communication de parole ou de données, ces services étant assurés par l'opérateur du réseau qui doit connaître l'identité du terminal ne serait-ce que pour facturer les services rendus.

Il est souhaitable qu'un terminal se connecte en priorité sur son réseau de rattachement. En effet, le détenteur du terminal a souscrit un contrat avec un opérateur qui lui fournit certains services qu'un autre opérateur n'est pas nécessairement à même de lui fournir; on prendra pour exemple les cas de la transmission de données. En outre, lorsqu'un terminal se connecte sur un réseau radio que l'on nommera réseau visiteur et qui est distinct de son réseau de rattachement, cela suppose que les deux opérateurs concernés aient conclu un accord autorisant cette connexion. Ce n'est pas toujours le cas et en supposant que ce le soit, il va falloir procéder à un échange d'informations entre les deux réseaux pour gérer les communications du terminal. On pense en premier lieu au prix du service rendu sur le réseau visiteur qui doit être transmis au réseau de rattachement du terminal afin de facturer le détenteur de ce dernier en conséquence.

Il est donc connu que le dispositif de recherche de connexion d'un terminal soit activé régulièrement suite à une action manuelle de son détenteur ou bien de manière automatique lorsque ce terminal est connecté à un réseau visiteur du même pays que son réseau de rattachement, de sorte qu'il rompe la connexion avec le réseau visiteur pour en établir une nouvelle avec le réseau de rattachement. Cette procédure qui est décrite dans la recommandation 03.22 du GSM s'applique uniquement lorsque le réseau visiteur appartient au même pays que le réseau de rattachement, le pays d'origine. Il ne semble pas logique de l'appliquer lorsque le réseau visiteur est dans un autre pays car les réseaux sont prévus pour désservir les terminaux d'un pays déterminé. A titre d'exemple, un terminal dont le pays d'origine est la France et qui est localisé au Danemark ne doit pas chercher à se connecter sur son réseau de rattachement car il s'ensuivra obligatoirement un échec.

Par surcroît, la procédure ci-dessus mentionnée consomme naturellement de l'énergie ce qui pénalise l'autonomie d'un terminal portatif pourvu d'un accumulateur d'énergie de capacité limitée. Il s'agit là d'un argument supplémentaire visant à ne pas appliquer cette procédure lorsque le réseau visiteur n'est pas dans le pays d'origine.

Cependant, lorsque le terminal se trouve dans une zone frontalière située à la limite de séparation de deux pays, il peut avoir accès à un réseau de chaque pays car du fait du type de transmission adopté, il n'est pas possible de limiter la zone de couverture d'un réseau précisément à la frontière. Il peut même arriver que le terminal, bien que dans son pays d'origine, puisse se connecter uniquement à un réseau d'un pays étranger car les conditions de transmission (les conditions de propagation radio) ne lui permettent pas de se connecter à son réseau de rattachement ou à un réseau visiteur de son pays d'origine, c'est le cas notamment lorsqu'il se trouve dans une zone d'ombre au sens radio, derrière un obstacle tel qu'une montagne empêchant la connexion, par exemple. Ainsi le terminal se trouve pénalisé et ne peut plus accèder à son réseau de rattachement même lorsque les conditions de transmission sont redevenues favorables.

Un but de la présente invention est de permettre à un terminal d'établir une nouvelle connexion avec son réseau de rattachement lorsqu'il est connecté à un réseau visiteur n'appartenant pas à son pays d'origine.

Ce but est atteint en disposant dans le terminal un dispositif de recherche de connexion tel que défini par la revendication 1.

Le dispositif ci-dessus, même s'il est activé au cours d'intervalles de temps relativement espacés, consomme de l'énergie comme cela a été précisé.

Un but complémentaire de la présente invention est de réduire la consommation d'énergie du terminal.

Ce but est atteint en prévoyant que le dispositif dispose d'une table où figure l'entité géographique d'origine et les entités géographiques qui lui sont adjacentes, et comprenne des moyens de sélection pour activer les moyens de recherche seulement si le réseau auquel il est connecté appartient à une entité géographique figurant dans cette table.

Un problème supplémentaire survient lorsque la connexion avec le réseau de rattachement peut effectivement être obtenue mais où elle serait d'une qualité médiocre et présenterait un risque important d'être interrompue.

Un autre but de l'invention vise donc à éviter de procurer une connexion peu satisfaisante au terminal.

Ce but est atteint en prévoyant que le dispositif dispose d'un indice de qualité de connexion au réseau de rattachement établi lors de la scrutation de tous les réseaux pouvant donner lieu à connexion, et comprenne des moyens d'inhibition pour empêcher la connexion au réseau de rattachement si cet indice de qualité est inférieur à un seuil de qualité prédéterminé.

Selon un mode de réalisation particulier du dispositif, le terminal étant connecté à un réseau par une connexion présentant une qualité qui constitue une valeur de référence, le seuil de qualité se présente comme la somme d'une valeur de sécurité prédéterminée et de cette valeur de référence.

De manière avantageuse, la connexion entre le terminal et l'un quelconque des réseaux du système de radiocommunnication se faisant au moyen d'un canal radio véhiculant un signal de contrôle, cet indice de qualité représente la puissance à laquelle le terminal reçoit le signal de contrôle correspondant.

L'invention apparaîtra maintenant de manière plus précise dans le cadre d'exemples de réalisation donnés à titre indicatif en se référant aux figures annexées qui représentent :
- la figure 1, les principaux éléments d'un terminal nécessaires à la mise en oeuvre de l'invention,
- la figure 2, un diagramme par blocs symbolisant le fonctionnement du dispositif de recherche de connexion.

En préalable à la recherche de connexion, un terminal doit effectuer une procédure de synchronisation qui sera maintenant rappelée pour la clarté de l'exposé.

Dans les systèmes de radiocommunication, le système paneuropéen cellulaire numérique de radiocommunication connu sous le nom de système GSM par exemple, les communications transitent entre un terminal et une station de base d'un réseau par des canaux de communication véhiculant des signaux radio. De tels systèmes comprennent une pluralité de canaux prévus soit pour l'émission des terminaux à destination des stations de base, soit pour l'émission des stations de base à destination des terminaux.

Parmi ces derniers canaux, figure un canal de contrôle émis en permanence qui permet à un terminal d'accéder à un réseau par la station de base qui émet ce canal afin de pouvoir établir des communications. Le terminal doit donc identifier ce canal de contrôle pour acquérir les informations qui lui permettent de se déclarer dans ce réseau. Parmi ces informations on trouve notamment des informations de synchronisation, c'est pourquoi il est habituel de parler de procédure de synchronisation. On y trouve également des informations liées au système parmi lesquelles le réseau auquel appartient la station de base et le pays auquel appartient ce réseau.

La solution généralement adoptée pour la synchronisation se déroule en deux étapes. Dans un premier temps le terminal mesure la puissance de tous les canaux affectés à la réception. Ensuite, le terminal essaie de se synchroniser sur le canal reçu avec la plus forte puissance et s'il n'y parvient pas, il essaie sur les autres canaux en les prenant par ordre de puissance à la réception décroissante jusqu'à ce qu'il puisse effectivement se synchroniser. Cette solution est d'ailleurs celle qui figure dans les recommandations 4.08 version 3.11.0 et 5.08 version 3.7.0 du GSM.

La procédure de synchronisation est engagée systématiquement lorsque le terminal est mis en marche. Elle l'est aussi, de manière plus générale, à la suite d'une perte de synchronisation, c'est-à-dire lorsque la connexion entre la station de base et le terminal a été interrompue. Elle l'est encore dans le cas qui nous préoccupe, c'est-à-dire lorsque le terminal est déjà connecté à un réseau, afin d'identifier les différents réseaux sur lesquels il pourrait se connecter.

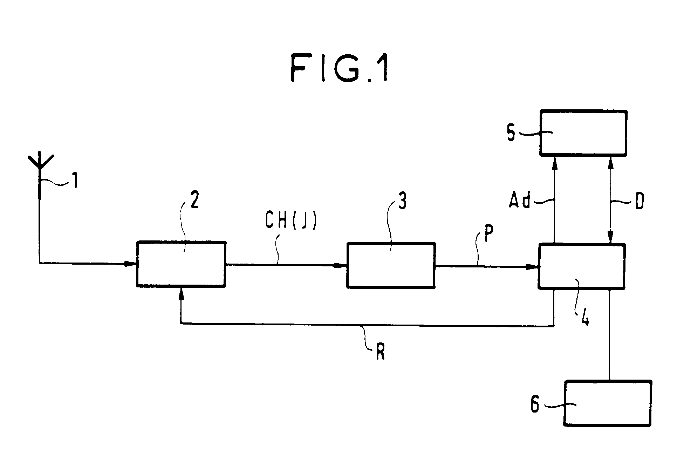

En référence à la figure 1, le terminal, de manière connue, comprend essentiellement une antenne 1 prévue pour la réception de différents canaux au nombre de N, un circuit de réception 2 tel qu'un synthétiseur de fréquence raccordé à l'antenne 1 qui sélectionne parmi ces canaux un canal d'accord CH(I) en réponse à un signal de réglage R, un circuit de mesure de puissance 3 qui produit un signal de puissance P représentant la puissance du canal d'accord CH(I), et un circuit de contrôle 4 tel qu'un microprocesseur qui produit le signal de réglage R, qui reçoit le signal de puissance P pour l'enregistrer dans une mémoire de travail 5 au moyen d'un signal données D à une adresse affectée au canal d'accord CH(I), ceci au moyen d'un signal d'adresse Ad.

De manière connue également, le circuit de contrôle 4 a accès à l'identité de tous les canaux que peut recevoir le terminal. A titre d'exemple, il peut s'agir d'une mémoire de canaux 6 associant pour chacun de ces canaux une valeur de consigne du signal de réglage R à une adresse de la mémoire de travail 5. Ainsi, dans un premier temps, le circuit de contrôle 4 produit le signal de réglage R ayant l'une des valeurs de consigne et enregistre dans la mémoire de travail 5 la valeur du signal de puissance P à l'adresse associée à cette valeur de consigne dans la mémoire de canaux 6. Le circuit de contrôle répète cette opération pour toutes les valeurs de consignes de sorte que la mémoire de travail 5 comprenne une valeur de puissance pour chacun des canaux.

Ensuite, il classe ces canaux dans la mémoire de travail 5 par ordre de puissance décroissante en conservant pour chacun une information significative de la valeur de consigne correspondante. Le résultat de cette opération est donc une première liste où figure des valeurs de consignes classées selon l'ordre de puissance décroissante des canaux correspondant.

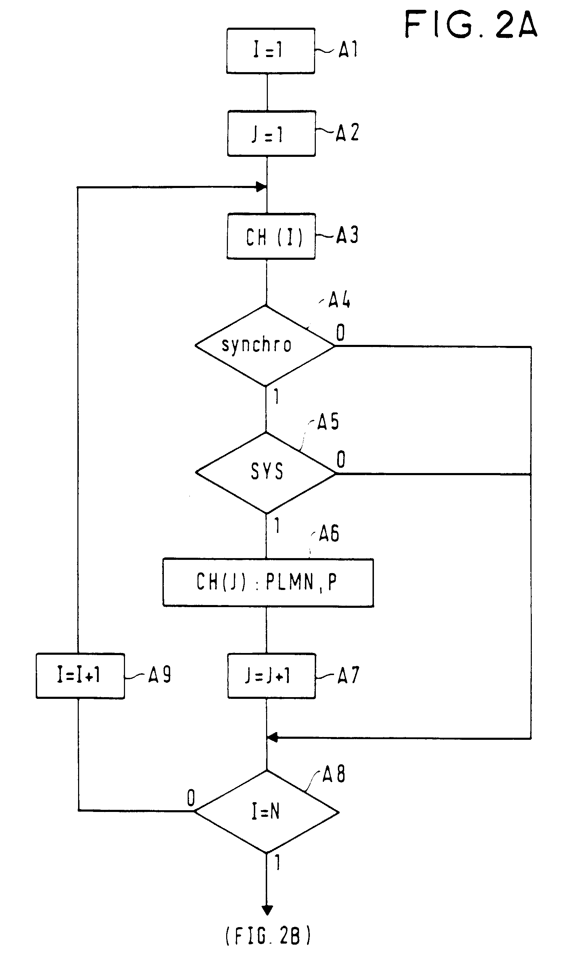

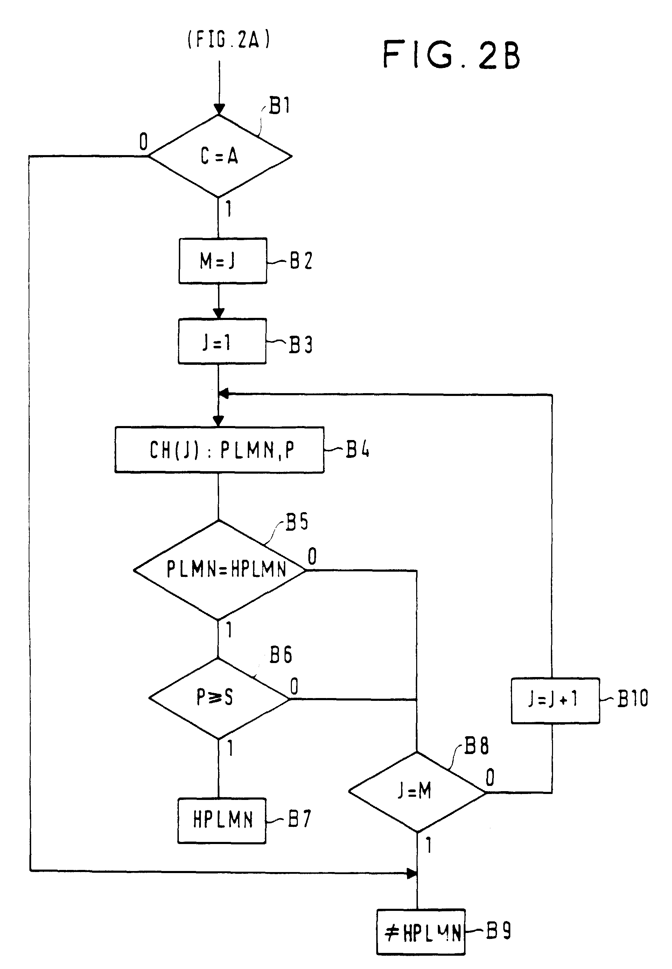

Dès lors, le fonctionnement du terminal sera analysé à l'aide d'un diagramme par blocs représenté dans la figure 2 où, par convention, une réponse positive à un test sera affectée de la valeur 1 et une réponse négative de la valeur 0.

En référence à la figure 2A, le circuit de contrôle 4 procède à une phase d'initialisation où il fixe la valeur de I à 1 dans un bloc A1 et de J à 1 dans un bloc A2.

Dans le bloc A3, le circuit de contrôle sélectionne comme canal d'accord CH(I) le canal de réception repéré par l'index I, celui qui figure au Iième emplacement de la mémoire de travail 6, au moyen de la valeur de consigne correspondante.

Dans le bloc A4, le circuit de contrôle 4 commande le terminal pour qu'il fasse une tentative de synchronisation en recherchant les informations de synchronisation qui sont présentes dans chaque canal de contrôle. Si la tentative échoue, le circuit de contrôle exécute le bloc A8 qui sera détaillée par la suite.

Si la synchronisation est effectivement obtenue le circuit de contrôle 4 commande le terminal dans le bloc A5 pour qu'il recherche les informations de système à savoir le réseau PLMN qui émet le canal de contrôle correspondant. Si ces informations ne peuvent pas être détectées, le circuit de contrôle exécute le bloc A8 qui sera détaillé par la suite.

Si les informations de système sont détectées, dans le bloc A6 le circuit de contrôle 4 écrit dans la mémoire de travail 5 dans une deuxième liste au Jième emplacement la valeur de consigne correspondant au canal sélectionné CH(J), le réseau PLMN, et la puissance P à laquelle a été reçu ce canal.

Ensuite, dans le bloc A7, la valeur de J est incrémentée d'une unité.

Dans le bloc A8, le circuit de contrôle 4 teste la valeur I pour savoir si tous les canaux de réception ont été examinés. Ainsi, si I est inférieur à N, il l'incrémente d'une unité dans la bloc A9 pour exécuter ensuite le bloc A3. Si par contre I est égal à N, cette phase de fonctionnement est terminée et le résultat en est la deuxième liste de la mémoire de travail 5 comprenant les caractéristiques des M canaux au moyen desquels il est possible de se connecter au système.

Le dispositif de recherche de connexion proprement dit qui comprend essentiellement le circuit de contrôle 4 et la mémoire de travail 5 va maintenant être présenté en référence à la figure 2B.

Dans le bloc B1, le circuit de contrôle 4 vérifie si le pays C du réseau visiteur auquel est actuellement connecté le terminal est un pays adjacent A du pays d'origine qui est, pour mémoire, le pays auquel appartient le réseau de rattachement HPLMN du terminal. En effet, il n'est pas nécessaire de rechercher une connexion sur le réseau de rattachement si le terminal est très éloigné du pays d'origine. A titre d'exemple, le terminal dispose d'une table située dans une zone mémoire qui pourrait faire partie de la mémoire de canaux 6. Dans cette table figurent les codes d'indentification du pays d'origine et des différents pays A qui lui sont adjacents. Ainsi, lorsque le pays d'origine est la France, cette table comprend la France, la Belgique, le Luxembourg, l'Allemagne, la Suisse, l'Italie et l'Espagne. Le circuit de contrôle 4 qui avait précédemment mémorisé le code du pays C auquel appartient le réseau sur lequel il est actuellement connecté vérifie si ce code figure dans la table. Dans la négative, il procède à l'exécution du bloc B9 qui sera détaillé ultérieurement. Dans l'affirmative, il exécute une phase d'initialisation commençant par le bloc B2.

On soulignera que l'exécution du bloc B1, bien que présentant des avantages propres, n'est pas strictement nécessaire à la mise en oeuvre de l'invention. Si l'on choisit de ne pas réaliser cette option, le circuit de contrôle 4 procède directement à l'exécution du bloc B2 après celle du bloc A8.

Dans le bloc B2, le circuit de contrôle 4 affecte la valeur de J précédemment calculée à la variable M qui représente le nombre d'éléments de la deuxième liste. Ensuite, dans le bloc B3, il réaffecte la valeur 1 à la variable J.

Le circuit de contrôle 4 procède alors dans le bloc B4 à la lecture dans la mémoire de travail 5 du Jième élément de la deuxième liste afin de disposer du réseau PLMN et de la puissance P du canal de contrôle correspondant.

Dans le bloc B5, le circuit de contrôle 4 vérifie si le réseau PLMN est le réseau de rattachement HPLMN. Si ce n'est pas le cas, il exécute directement le bloc B8 qui est explicité par la suite. Si c'est le cas il exécute le bloc B6.

Dans le bloc B6, le circuit de contrôle 4 vérifie si le canal de contrôle correspondant est reçu avec une puissance P suffisante. En effet, il faut éviter de se connecter à un réseau si cette connexion doit être interrompue peu de temps après du fait d'une qualité insuffisante. Il est donc prudent de prévoir que la connexion sur le réseau de rattachement HPLMN sera autorisée seulement si la puissance P excède un seuil prédéterminé S. Ce seuil S peut être fixé de manière absolue mais il peut également être fixé par rapport à la puissance de référence avec laquelle est reçu le signal de contrôle émis par le réseau visiteur auquel est actuellement connecté le terminal. Dans ce dernier cas, le seuil S se présente comme la somme de la puissance de référence et d'une valeur de sécurité qui peut être positive, nulle ou même négative. Le circuit de contrôle 4 qui dispose de cette valeur de sécurité prédéterminée préalablement mémorisée et de la puissance de référence acquise lors de la synchronisation sur ce réseau visiteur est donc capable de calculer ce seuil S. La qualité de connexion a été appréciée ici par une mesure de puissance. L'invention s'applique également si elle est appréciée au moyen d'un autre indice, par exemple au moyen d'un taux d'erreur.

On soulignera que l'exécution du bloc B6, bien que présentant des avantages propres, n'est pas strictement nécessaire à la mise en oeuvre de l'invention. Si l'on choisit de ne pas réaliser cette option, le circuit de contrôle 4 procède directement à l'exécution du bloc B7 à la suite du bloc B5 si celui-ci a établi que le réseau examiné PLMN est le réseau de rattachement HPLMN. On remarquera que dans ce cas, il n'est pas nécessaire de mémoriser la puissance P du canal en cours de traitement dans le bloc A6.

Si par contre l'on choisit de réaliser l'option proposée, le circuit de contrôle 4 exécute le bloc B8 détaillé ci-après si la puissance P du canal sélectionné CH(J) est inférieure au seuil S, tandis que dans le cas contraire il exécute le bloc B7.

Dans le bloc B7, le circuit de contrôle établit qu'il est possible de se connecter sur le réseau de rattachement HPLMN au moyen du canal sélectionné CH(J) et commande le terminal à cet effet. Les moyens pour établir cette connexion ne seront pas plus détaillés car ils font partie de l'état de la technique et car ils sortent du cadre de la présente invention.

Dans le bloc B8, le circuit de contrôle 4 vérifie si la totalité des canaux figurant dans la deuxième liste ont été examinés, c'est-à-dire si J est égal à M. Si ce n'est pas le cas, il procède à l'exécution du bloc B10 ci-après détaillé, tandis que si c'est le cas il exécute le bloc B9.

Dans le bloc B9, le circuit de contrôle 4 a déjà établi qu'il n'était pas possible de se connecter sur le réseau de rattachement HPLMN. Les actions subséquentes sortent du cadre de la présente invention mais une solution simple consiste à ne pas modifier la connexion déjà établie.

Dans le bloc B10, le circuit de contrôle 4 incrémente la valeur de J d'une unité et procède à nouveau à l'exécution du bloc B4 pour examiner le canal suivant de la deuxième liste.

Le dispositif de recherche de connexion fonctionne en mode automatique, c'est-à-dire qu'il répète la suite des opérations décrites ci-dessus en référence aux blocs Al à B10 de manière régulière. A titre d'exemple, cette répétition peut être commandée par une temporisation elle même commandée par le circuit de contrôle 4.

Par ailleurs, l'invention a été décrite en relation avec des réseaux appartenant à des pays. Il s'agit là uniquement d'un exemple et l'invention s'applique également si ces pays sont des entités géographiques comprenant plusieurs pays ou au contraire une partie seulement d'un pays. Le point important est qu'une telle entité géographique comprenne un ou plusieurs réseaux et que ces réseaux soient limités par cette entité : un réseau peut couvrir la totalité où une partie de l'entité géographique mais il ne peut pas en dépasser les limites. La seule exception est celle prévue dans le préambule, qui fait l'objet de cette invention, est qui est due au mode de transmission : il n'est pas possible d'arrêter un rayonnement radio sur une ligne de séparation prédéterminée.

## Revendications

1. Dispositif de recherche de connexion d'un terminal à un réseau d'un système de radiocommunication comprenant plusieurs réseaux (PLMN), ledit système s'étendant dans plusieurs entités géographiques chacune pourvue d'un réseau (PLMN) au moins, ledit terminal étant affilié à un réseau de rattachement (HPLMN) appartenant à une entité géographique d'origine, caractérisé en ce que, lesdites entités géographiques correspondant à des pays distincts, et ladite entité géographique d'origine correspondant à un pays particulier parmi lesdits pays distincts, le dispositif comprend des moyens de recherche pour rechercher la connexion sur ledit réseau de rattachement (HPLMN) lorsqu'il est connecté à un réseau n'appartenant pas à ladite entité géographique d'origine.

2. Dispositif selon la revendication 1 caractérisé en ce que, disposant d'une table (A) où figure ladite entité géographique d'origine et les entités géographiques qui lui sont adjacentes, il comprend des moyens de sélection (B1) pour activer lesdits moyens de recherche seulement si le réseau auquel il est connecté appartient à une entité géographique (C) figurant dans ladite liste.

3. Dispositif selon la revendication 1 ou 2 caractérisé en ce que, disposant d'un indice de qualité de connexion (P) audit réseau de rattachement (HPLMN) établi lors de la scrutation de tous les réseaux (PLMN) pouvant donner lieu à connexion, il comprend des moyens d'inhibition (B6) pour empêcher la connexion audit réseau de rattachement (HPLMN) si ledit indice de qualité (P) est inférieur à un seuil de qualité prédéterminé (S).

4. Dispositif selon la revendication 3 caractérisé en ce que, ledit terminal étant connecté à un réseau (PLMN) par une connexion présentant une qualité qui constitue une valeur de référence, ledit seuil de qualité se présente comme la somme d'une valeur de sécurité prédéterminée et de ladite valeur de référence.

5. Dispositif selon la revendication 3 ou 4 caractérisé en ce que, la connexion entre ledit terminal et l'un quelconque des réseaux (PLMN) dudit système de radiocommunication se faisant au moyen d'un canal radio véhiculant un signal de contrôle, ledit indice de qualité (P) représente la puissance à laquelle ledit terminal reçoit le signal de contrôle correspondant.

## Patentansprüche

1. Vorrichtung zur Verbindungssuche eines Endgerätes zu einem Netz eines Funkkommunikationssystems, das mehrere Netze (PLMN) umfaßt, wobei das System sich über mehrere geographische Einheiten erstreckt, von denen jede zumindest mit einem Netz (PLMN) ausgestattet ist, wobei das Endgerät einem Heimatnetz (HPLMN) angehört, das zu einer geographischen Herkunftseinheit gehört, dadurch gekennzeichnet, daß die geographischen Einheiten verschiedenen Ländern entsprechen, und daß die geographische Herkunftseinheit einem bestimmten Land unter diesen verschiedenen Ländern entspricht, daß die Vorrichtung Suchmittel umfaßt, um eine Verbindung mit dem Heimatnetz (HPLMN) zu suchen, wenn sie mit einem Netz verbunden ist, das nicht zu der besagten geographischen Herkunftseinheit gehört.

2. Vorrichtung nach Anspruch 1, dadurch gekennzeichnet, daß sie über eine Tabelle (A) verfügt, wo die geographische Herkunftseinheit und die an sie angrenzenden geographischen Einheiten vorkommen, daß sie Auswahlmittel (B1) umfaßt, um die Suchmittel nur dann zu aktivieren, wenn das Netz, mit dem sie verbunden ist, zu einer geographischen Einheit (C) gehört, die in dieser Liste vorkommt.

3. Vorrichtung nach Anspruch 1 oder 2, dadurch gekennzeichnet, daß sie über ein Qualitätskriterium der Verbindung (P) zu dem Heimatnetz (HPLMN) verfügt, das bei der Abfrage aller Netze (PLMN), die für eine Verbindung in Frage kommen, erstellt wird, und daß sie Sperrmittel (B6) umfaßt, um die Verbindung mit dem Heimatnetz (HPLMN) zu verhindern, wenn das Qualitätskriterium (P) geringer als ein vorgegebener Qualitätsschwellwert (S) ist.

4. Vorrichtung nach Anspruch 3, dadurch gekennzeichnet, daß wenn das Endgerät mit einem Netz (PLMN) über eine Verbindung verbunden ist, die eine einen Referenzwert darstellende Qualität aufweist, der Qualitätsschwellwert sich als die Summe eines vorbestimmten Sicherheitswertes und des Referenzwertes ergibt.

5. Vorrichtung nach Anspruch 3 oder 4, dadurch gekennzeichnet, daß die Verbindung zwischen dem Endgerät und einem beliebigen der Netze (PLMN) des Funkkommunikationssystems mittels eines Funkkanals erfolgt, der ein Steuersignal transportiert, wobei das Qualitätskriterium (P) die Leistung darstellt, mit der das Endgerät das entsprechende Steuersignal empfängt.

## Claims

1. Device for seeking connection of a terminal to a network of a mobile radio system comprising a plurality of networks (PLMN), said system extending over a plurality of geographical entities each having at least one network (PLMN) and said terminal being affiliated to a home network (HPLMN) belonging to a geographical entity of origin, characterised in that said geographical entities corresponding to different countries and said geographical entity of origin corresponding to a particular one of said different countries, the device comprises seek means for seeking the connection to said home network (HPLMN) when it is connected to a network which does not belong to said geographical entity of origin.

2. Device according to claim 1 characterised in that, holding a table (A) listing said geographical entity of origin and the geographical entities adjacent thereto, it comprises selector means (B1) for activating said seek means only if the network to which it is connected belongs to a geographical entity (C) in said list.

3. Device according to claim 1 or claim 2 characterised in that, holding a quality indicator (P) in respect of the connection to said home network (HPLMN) established during scanning of all the networks (PLMN) to which a connection can be achieved, it comprises inhibitor means (B6) for preventing connection to said home network (HPLMN) if said quality indicator (P) is below a predetermined quality threshold (S).

4. Device according to claim 3 characterised in that, said terminal being connected to a network (PLMN) by a connection whose quality constitutes a reference value, said quality threshold is the sum of a predetermined safety margin and said reference value.

5. Device according to claim 3 or claim 4 characterised in that, the connection between said terminal and any network (PLMN) of said mobile radio system using at least one radio channel conveying a control signal, said quality indicator (P) represents the power at which said terminal receives the respective control signal.
